(19) Europäisches Patentamt
European Patent Office
Office européen des brevets

(11) **EP 4 195 223 B1**

(12) **EUROPEAN PATENT SPECIFICATION**

(45) Date of publication and mention
of the grant of the patent:
**01.10.2025 Bulletin 2025/40**

(21) Application number: **21213066.0**

(22) Date of filing: **08.12.2021**

(51) International Patent Classification (IPC):
***H01B 1/24*** *(2006.01)*     ***C08K 3/04*** *(2006.01)*
***C08K 5/00*** *(2006.01)*

(52) Cooperative Patent Classification (CPC):
(C-Sets available)
**H01B 1/24; C08K 3/04; C08K 3/046;**
C08K 2201/001                                  (Cont.)

(54) **SEMICONDUCTIVE POLYOLEFIN COMPOSITION COMPRISING CARBONACEOUS STRUCTURES, POWER CABLE COMPRISING THE SAME AND USE THEREOF**

HALBLEITENDE POLYOLEFINZUSAMMENSETZUNG MIT KOHLENSTOFFHALTIGEN STRUKTUREN, STROMKABEL DAMIT UND VERWENDUNG DAVON

COMPOSITION DE POLYOLÉFINE SEMI-CONDUCTRICE COMPRENANT DES STRUCTURES CARBONÉES, CÂBLE ÉLECTRIQUE LA COMPRENANT ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Borealis GmbH**
**1020 Vienna (AT)**

(72) Inventors:
• **GKOURMPIS, Thomas**
**444 86 Stenungsund (SE)**
• **KADAR, Roland**
**41296 Gothenburg (SE)**
• **MANIKA, Georgia**
**41296 Gothenburg (SE)**
• **THEODORIDIS, Athanasios**
**41296 Gothenburg (SE)**

(74) Representative: **Kador & Partner Part mbB**
**Corneliusstraße 15**
**80469 München (DE)**

(56) References cited:
**EP-A1- 3 495 411     EP-A1- 3 495 412**
**EP-B1- 2 374 842     WO-A1-2020/157285**

(52) Cooperative Patent Classification (CPC): (Cont.)

C-Sets
**C08K 3/04, C08L 23/04;**
**C08K 3/04, C08L 23/10;**
**C08K 3/046, C08L 23/04;**
**C08K 3/046, C08L 23/10**

## Description

The present invention relates to a semiconductive polyolefin composition comprising carbonaceous structures. It also relates to the use of the semiconductive polyolefin composition. Further, the invention is also related to a power cable comprising at least one semiconductive layer comprising said polyolefin composition.

A semiconductive material is defined as a material having an electrical conductivity intermediate between insulators and conductors. A typical range of electrical conductivity for semiconductors is in the range from $10^{-9}$ to $10^{3}$ S/cm corresponding to electrical resistivity between $10^{9}$ to $10^{-3}$ ohm · cm (see for example McGraw-Hill Dictionary of Scientific and Technical Terms, 4th Ed., pp. 1698, 1989).

A common means to achieve a semiconductive polymer composite is to incorporate carbon black (CB) in the polymer in an amount typically between 30 to 50 wt.% such as e.g. disclosed in US 5,556,697. However, high loadings of CB result in high viscosity of the compounds. Lower CB loadings are desirable to improve the processability of the compounds in cable extrusions while maintaining high conductivity. One option is high structure CB such as Ketjen Black, allowing reducing the required amount of conductive filler but due to the high structure is drastically increasing the viscosity even at low loadings.

Another option for increasing the conductivity in semiconductive materials is incorporation of carbon nanotubes (CNTs) and graphene nanoplatelets (GNPs). Electrically conductive polymer nanocomposites have been disclosed using single or multi-layers graphene nanoplatelets as in WO2008/045778A1 and WO2008/143692A1.

Graphene nanoparticles may be formed of thin, independent graphite flakes or platelets. The nanoparticles may also be shaped to have corners, or edges that meet to form points. The platelets may be fully isolated from the original graphite particle, or may be partially attached to the original particle. Also, more complex secondary structures such as cones are also included, see for example Schniepp, Journal of Physical Chemistry B, 110 (2006) pp. 8535.

Graphene nanoplatelets (GNPs) are characterized in that the material is composed of one or several layers of two-dimensional hexagonal lattice of carbon atoms. The platelets have a length parallel to the graphite plane, commonly referred to as lateral diameter, and a thickness orthogonal to the graphite plane, commonly referred to as thickness. Another characteristic feature of GNPs is that the platelets are very thin yet have large lateral diameter, hence GNPs have a very large aspect ratio, i.e. ratio between the lateral diameter and the thickness.

Graphene nanoplatelets may also include graphene platelets that are somewhat wrinkled such as for example described in Stankovich et al, Nature 442, (2006), pp. 282. Additionally, graphene materials with wrinkles to another essentially flat geometry are included. In another aspect, the GNPs can be functionalized to improve interaction with the base resins. Non-limiting examples of surface modifications includes treatment with nitric acid; $O_2$ plasma; UV/Ozone; amine; acrylamine such as disclosed in US2004/127621 A1.

The graphene nanoparticles may be derived from treated graphite sheets, e.g. expanded graphite that can be exposed to high temperatures (e.g. in the range of from 600 to 1200 °C) so that the graphite sheets expand in dimension from 100 to 1000 or more times its original volume in an accordion-like fashion in the direction perpendicular to the crystalline planes of the graphite. These agglomerates may assume an elongated shape with dimensions in the order of 1 to 100 $\mu$m.

Possible production procedures of graphene nanoplatelets and single graphene sheets have been disclosed in e.g. US 2002/054995 A1, US 2004/127621 A1, US 2006/241237 A1 and US 2006/231792 A1. Such processes are for example further discussed by Stankovich et al, Nature 442, (2006) pp.282, and by Schniepp, Journal of Physical Chemistry B,110 (2006) pp. 853. Non-limiting examples of materials are Vor-X™ provided by Vorbecks Materials and xGNP™ provided by XG Science, Lansing, MI, USA.

US2002/054995 A1 discloses how nanoplatelets can be created by high pressure mill giving an aspect ratio between the lateral diameter and the thickness of 1500:1 and a thickness 1-100 nm.

WO 03/024602 A1 discloses separated graphite nanostructures formed of thin graphite platelets having an aspect ratio of at least 1500:1. The graphite nanostructures are created from synthetic or natural graphite using a high-pressure mill. The resulting graphite nanostructures can be added to polymeric materials to create polymer composites having increased mechanical characteristics, including an increased flexural modulus, heat deflection temperature, tensile strength, electrical conductivity, and notched impact strength. The effects observed in this disclosure require filler loadings, if added to polypropylene, as high as 38 wt.% or 53 wt.%.

EP 2 374 842 B1 discloses a semiconductive polyolefin composition with low loading filler concentration where graphene nanoplatelets (GNP) are incorporated into an olefin polymer base resin. The GNPs have a thickness of 100 nm or less and a lateral diameter of 200 micrometers or less, measured by AFM. Such a semiconductive polyolefin composition exhibits low viscosity, high conductivity and excellent surface smoothness. An EVA based resin filled with 10 wt.% of xGNPTM (XG Science, Lansing, MI, USA) provided an electrical resistivity of 9.5·106 Ohm·cm. Partially carbon black is added to tailor the properties of the nanocomposite material.

WO 2013/033603 A1 discloses a field grading material which is an insulation material used in electrical installations. The composite material comprises a polymer material and reduced graphene oxide distributed within the polymer material. The reduced graphene oxide supplies non-linear resistivity to the composite material. By the incorporation of the reduced graphene oxide a non-linear increase in conductivity is observed, with conductivity exceeding and saturating above that of the neat polymer material. The conductivity is measured at a significantly high electrical field.

KR 101408925 B1 discloses a lightweight power cable having excellent physical properties like volume ratio resistance, hot set, tensile strength, elongation, etc. The lightweight power cable comprises a conductor, and various layer, whereby the inner semiconductive layer or the outer semiconductive layer are formed by a semiconductive composition, and the semiconductive composition comprises carbon nanotubes, carbon black, graphene, carbon nanotube-graphene hybrid composite.

Compositions used in semiconductive applications thus still tend to contain excessive amounts of CB and/or graphene nanoparticles. In case of CB this has detrimental effects on the processing and mechanical properties especially since the electrical conductivity required for wire and cable applications requires large amounts of CB (ca. 35-40wt%). In case of graphene nanoparticles, large addition amounts are still required to reach improved conductivity in advanced wire and cable application. This in turn deteriorates the processing properties of the loaded polymer composition and increases production costs and equipment complexity.

Therefore, it is an object of the present invention to provide a semiconductive polyolefin composition with low filler loading and improved conductivity and processability.

It was surprisingly found that this object can be achieved by an improved semiconductive polyolefin composition comprising, preferably consisting of,

(A) 80 to 99.5 wt.% of an olefin polymer base resin based on the total weight of the semiconductive polyolefin composition;

(B) 0.1 to 10.0 wt.% of first carbonaceous structures based on the total weight of the semiconductive polyolefin composition;

(C) 0.2 to 15.0 wt.% of carbon black and/or second carbonaceous structures based on the total weight of the semiconductive polyolefin composition; and

(D) optionally additives;

wherein the combined amount of components (B) and (C) is at least 0.3 wt.% and not more than 15.0 wt.% based on the total weight of the semiconductive polyolefin composition; and

wherein the semiconductive polyolefin composition has an electrical percolation threshold of not more than 5 wt.% of the combined amount of components (B) and (C) dispersed in the olefin polymer base resin (A), the electrical percolation threshold being defined as the critical concentration in wt.% of the components (B) and (C) in the olefin polymer base resin (A) where an exponential increase in electrical conductivity is observed;

wherein the polyolefin composition has a conductivity of at least $1 \cdot 10^{-7}$ S/cm determined according to Broadband Dielectric Spectroscopy for a percolation threshold of 1.0 wt.% or lower and 2-point electrical measurements for a percolation threshold of more than 1.0 wt.%; and wherein components (A) to (D) add up to 100 wt.%.

The semiconductive polyolefin composition is obtained by melt-mixing the olefin polymer base resin (A) with first carbonaceous structures (B) and carbon black and/or second carbonaceous structures (C).

The present invention also relates to a power cable comprising a semiconductive layer which comprises the semiconductive polyolefin composition as defined herein, as well as to the use of a semiconductive polyolefin composition as defined herein in a semiconductive layer of a power cable.

The "electrical percolation threshold" (also termed the "percolation point") is defined as the critical (minimum) concentration in wt.% of first carbonaceous structures (B) in combination with carbon black and/or second carbonaceous structures (C) in the olefin polymer base resin (A) where an exponential increase in electrical conductivity is observed. In other words, it indicates the minimum loading of the combined carbonaceous structures (B) and carbon black and/or second carbonaceous structures (C) in wt.%, at which the filler loading is such that an adequate network capable of facilitating current flow is created, which is followed by a sharp increase in the observed conductivity value. The percolation threshold indicates the efficiency of the network formation, i.e. the degree of dispersion. Thus, low percolation threshold indicates that the dispersion of first carbonaceous structures and carbon black and/or second carbonaceous structures is good.

Percolation is a mathematical concept that describes the connectivity of random clusters. Percolation threshold describes the onset of long-range connectivity in random systems. Below the threshold, long range connectivity does not exist while above the threshold, long range connectivity begins to materialize. Traditionally, a large and sharp change on the measured property that results from the long range connectivity is observed in the vicinity of the percolation threshold. For the purposes of this disclosure, the "long range connectivity" equals the electrical conductivity. The electrical conductivity increases in the vicinity of the threshold by (at least) 2-3 orders of magnitude. This phenomenon is discussed in detail by Thomas Gkourmpis, Innovation and Technology, Borealis AB, Stenungsund SE in "Controlling the Morphology of Polymers" by Geoffrey R. Mitchell and Ana Tojeira (Eds.)

The term "filler loading" in the context of the present description refers to the added amount of first carbonaceous structures and carbon black and/or second carbonaceous structures in weight percent based on the total weight of the semiconductive polyolefin composition.

The electrical saturation conductivity above the percolation threshold is measured at a predetermined loading (wt.% of first carbonaceous structures and carbon black and/or second carbonaceous structures in the semiconductive polyolefin composition) of the filled polyolefin composition where the network is fully developed and where, despite further addition of the filler, the conductivity is substantially constant compared to the percolation region. This is explained by the schematic representation on page 211 (Figure 8.1) and page 215 (Figure 8.3) of Thomas Gkourmpis, Innovation and Technology, Borealis AB, Stenungsund SE in "Controlling the Morphology of Polymers" by Geoffrey R. Mitchell and Ana Tojeira (Eds.), Springer International Publishing Switzerland, 2016, cited previously.

The post-percolation conductivity above the percolation threshold is observed at a loading of first carbonaceous structures and carbon black and/or second carbonaceous structures wherein increased amount of the filler leads to small changes (within an order of magnitude) in conductivity in comparison to the percolation region. Post-percolation conductivity may have the same or different value compared to saturation conductivity.

Throughout the description of the present invention, the term "polyolefin" or "olefin polymer" encompasses both an olefin homopolymer and a copolymer of an olefin with one or more comonomer(s). As well-known, "comonomer" refers to copolymerizable monomer units.

The term "copolymer" refers to a polymer made from at least two monomers. It includes, for example, copolymers, terpolymers and tetrapolymers.

The term "carbonaceous structure" refers to partially or fully dispersed clusters of a plurality of carbonaceous components as well as individual components, wherein each carbonaceous component is constituted by allotropes of carbon, in particular carbon nanotubes (CNT), graphite and graphene. The allotropes may also contain other atoms apart of carbon such as oxygen, nitrogen, sulfur, phosphor and hydrogen. Carbonaceous structures in the sense of the invention are in particular carbon nanotubes, modified carbon nanotubes, graphene, modified graphene, graphene oxide, reduced graphene oxide, graphite, graphite oxide and reduced graphite oxide worm-like structures. The carbon nanotubes can be single-walled carbon nanotubes (SWCNT) or multi-walled carbon nanotubes (MWCNT).

The expression "compounding" as used herein embraces mixing of the material according to standard methods known in the art. Non-limiting examples of compounding equipment comprise continuous single or twin screw mixers such as Farell™, Werner and Pfleiderer™, Kobelco Bolling™ and Buss™, or internal batch mixers, such as Brabender™ or Banbury™.

Component (A)

Component (A) is an olefin polymer base resin and is comprised in the semiconductive polyolefin composition in an amount of from 80 to 99.5 wt.%, preferably from 85 to 99.5 wt.% and more preferably from 87 to 99.5 wt.% of based on the total weight of the semiconductive polyolefin composition.

The olefin polymer base resin (A) is not particularly limited. However, preferably the olefin polymer base resin (A) is selected from the group consisting of ethylene homopolymer, propylene homopolymer, copolymer of ethylene with at least one $C_3$ to $C_8$ α-olefin as comonomer or copolymer of propylene with at least ethylene or one $C_4$ to $C_8$ α-olefin as comonomer.

Moreover, the olefin polymer base resin (A) preferably comprises a copolymer of ethylene with at least one comonomer selected from unsaturated esters or a heterophasic propylene copolymer.

Preferably, the polyolefin is an olefin homopolymer or copolymer which contains one or more comonomer(s), more preferably an ethylene homo- or copolymer or a propylene homo- or copolymer. Preferably, the polyolefin is a copolymer of ethylene with at least one comonomer selected from unsaturated esters or a propylene homopolymer. The polyolefin according to the present invention is readily available from polymer suppliers or can be prepared according to or analogously to known polymerization processes described in the chemical literature.

When the polyolefin, preferably polyethylene, is produced in a low pressure process, it is typically produced by a coordination catalyst, preferably selected from a Ziegler-Natta catalyst, a single site catalyst, which comprises a metallocene and/or non-metallocene catalyst, and/or a Cr catalyst, or any mixture thereof. The polyethylene produced in a low pressure process can have any density, e.g. be a very low density linear polyethylene (VLDPE), a linear low density polyethylene (LLDPE) copolymer of ethylene with one or more comonomer(s), medium density polyethylene (MDPE) or high density polyethylene (HDPE). The polyolefin can be unimodal or multimodal with respect to one or more of molecular weight distribution, comonomer distribution or density distribution. Low pressure polyethylene may be multimodal with respect to molecular weight distribution. Such a multimodal polyolefin may have at least two polymer components which have different weight average molecular weight, preferably a lower weight average molecular weight (LMW) and a higher weight average molecular weight (HMW). A unimodal polyolefin, preferably low pressure polyethylene, is typically prepared using a single stage polymerization, e.g. solution, slurry or gas phase polymerization, in a manner well-known in the art. A multimodal (e.g. bimodal) polyolefin, for example a low pressure polyethylene can be produced by mechanically blending two or more, separately prepared polymer components or by in-situ blending in a multistage polymerization process during the preparation process of the polymer components. Both mechanical and in-situ blending is well-known in the field. A multistage polymerization process may preferably be carried out in a series of reactors, such as a loop reactor, which may be a slurry reactor and/or one or more gas phase reactor(s). Preferably, a loop reactor and at least one gas phase reactor is used. The polymerization may also be preceded by a pre-polymerization step.

When the polyolefin, preferably polyethylene, is produced in a high pressure process, a LDPE homopolymer or a LDPE copolymer of ethylene with one or more comonomers may be produced. The LDPE homopolymer or copolymer may be unsaturated. For the production of ethylene (co)polymers by high pressure radical polymerization, reference can be made to the Encyclopedia of Polymer Science and Engineering, Vol. 6 (1986), pp 383-410 and Encyclopedia of Materials: Science and Technology, 2001 Elsevier Science Ltd.: "Polyethylene: High-pressure", R. Klimesch, D. Littmann and F.-O. Mähling pp. 7181-7184.

Polyolefin polymers may include, but are not limited to, copolymers of ethylene and unsaturated ester with an ester content of up to 50 wt.% based on the weight of the copolymer. Non-limiting examples of unsaturated esters are vinyl esters, acrylic acid and methacrylic acid esters, typically produced by conventional high pressure processes. The ester can have from 3 to about 20 carbon atoms, preferably 4 to 10 atoms. Non-limiting examples of vinyl esters are: vinyl acetate, vinyl butyrate, and vinyl pivalate. Non-limiting examples of acrylic and methacrylic acid esters are: methyl acrylate, ethyl acrylate, t-butyl acrylate, n-butyl acrylate, isopropyl acrylate, hexyl acrylate, decyl acrylate and lauryl acrylate.

The polyolefins according to the present invention may be elastomeric ethylene/$\alpha$-olefin copolymers having an $\alpha$-olefin content of from 15 wt.%, preferably from 25 wt.%, based on the weight of the copolymer. These copolymers typically have an $\alpha$-olefin content of 50 wt.% or less, preferably 40 wt.% or less and most preferably 35 wt.% or less, based on the weight of the copolymer. The $\alpha$-olefin content is measured by $^{13}C$ nuclear magnetic resonance (NMR) spectroscopy as described by Randall (Re. Macromolecular Chem. Phys. C29 (2&3)). The $\alpha$-olefin is preferably a C3-20 linear, branched or cyclic $\alpha$-olefin.

Examples of C3-20 $\alpha$-olefins include propene, 1-butene, 4-methyl-1-pentene, 1-hexene, 1-octene, 1-decene, 1-dodecene, 1-tetradecene, 1-hexadecene and 1-octadecene. The $\alpha$-olefins can also contain a cyclic structure, such as cyclohexane or cyclopentane, resulting in an $\alpha$-olefin such as 3-cyclohexyl-1-propene and vinyl cyclohexane. Although not $\alpha$-olefins in the classical sense of the term, for the purpose of this invention certain cyclic olefins such as norbornene and related olefins, particularly 5-ethylidene-2-norbornene, are encompassed by the term "$\alpha$-olefins" and can be used as described above. Similarly, styrene and its related olefins, e.g. $\alpha$-methylstyrene, are $\alpha$-olefins for the purpose of this invention. Illustrative examples of copolymers in the sense of the present invention include ethylene/propylene, ethylene/butene, ethylene/1-hexene, ethylene/1-octene, ethylene/styrene and similar. Illustrative examples of terpolymers include ethylene/propylene/1-octene, ethylene/butene/1-octene, ethylene/propylene/diene monomer (EPDM) and ethylene/butene/styrene. The copolymer can be random or blocky.

Copolymerization can be carried out in the presence of one or more further comonomers which are copolymerizable with the two monomers mentioned above and which, for example, may be selected from vinylcarboxylate esters such as vinyl acetate and vinyl pivalate; (meth)acrylates such as methyl(meth)-acrylate, ethyl(meth)acrylate and butyl(meth)acrylate; (meth)acrylic acid derivatives such as (meth)acrylonitrile and (meth)acrylamide; vinyl ethers, such as vinylmethyl ether and vinylphenyl ether; $\alpha$-olefins such as propylene, 1-butene, 1-hexene, 1-octene and 4-methyl-1-pentene; olefinically unsaturated carboxylic acids, such as (meth)acrylic acid, maleic acid and fumaric acid; and aromatic vinyl compounds, such as styrene and alpha-methyl styrene.

Preferred comonomers are vinyl ethers of monocarboxylic acids having 1-4 carbon atoms, such as vinyl acetate and (meth)acrylate of alcohols having 1-8 carbon atoms, such as methyl(meth)acrylate. The expression "(meth)acrylic acid" used herein is intended to include both acrylic acid and methacrylic acid. The comonomer content in the polymer may be present in the amount of 40 wt.% or less, preferably 0.5-35 wt.%, more preferably 1-25 wt.%.

Other examples of olefin polymers are: polypropylene, e.g. homopolypropylene, propylene copolymer; polybutene, butene copolymers; highly short chain branched $\alpha$-olefins copolymers with an ethylene co-monomer content of 50 mole percent or less; polyisoprene; EPR (ethylene copolymerized with propylene); EPDM (ethylene copolymerized with propylene and a diene such as hexadiene, dicyclopentadiene, or ethylidene norbornene); copolymers of ethylene and an $\alpha$-olefin having 3 to 20 carbon atoms such as ethylene/octene copolymers; terpolymers of ethylene, $\alpha$-olefin and a diene; terpolymers of ethylene, $\alpha$-olefin and an unsaturated ester; copolymers of ethylene and vinyl-tri-alkyloxy silane;

terpolymers of ethylene, vinyl-tri-alkoloxy silane and an unsaturated ester; or copolymers of ethylene and one or more acrylonitrile and maleic acid esters. Further, the olefin polymer may comprise ethylene ethyl acrylate. The comonomers can be incorporated randomly or in block and/or graft structures.

The olefin polymer may comprise or may be a heterophasic olefin copolymer, e.g. a heterophasic propylene copolymer. The heterophasic propylene copolymer may preferably be a heterophasic copolymer comprising a propylene random copolymer as matrix phase (RAHECO) or a heterophasic copolymer having a propylene homopolymer as matrix phase (HECO). A random copolymer is a copolymer where the comonomer part is randomly distributed in the polymer chains and it also consists of alternating sequences of two monomeric units of random length (including single molecules). It is preferred that the random propylene copolymer comprises at least one comonomer selected from the group consisting of ethylene and $C_4$-$C_8$ α-olefins. Preferred $C_4$-$C_8$ α-olefins are 1-butene, 1-pentene, 4-methyl-1-pentene, 1-hexene, 1-heptene or 1-octene, more preferred 1-butene. A particularly preferred random propylene copolymer may comprise or consist of propylene and ethylene. Furthermore, the comonomer content of the polypropylene matrix preferably is 0.5 to 10 wt.%, more preferably 1 to 8 wt.% and even more preferably 2 to 7 wt.%. For combining optimum processability with the required mechanical properties, the incorporation of the comonomer can be controlled in such a way that one component of the polypropylene contains more comonomer than the other. Suitable polypropylenes are described e.g. in WO03/002652A.

The semiconductive polyolefin compositions may be crosslinkable. "Crosslinkable" means that when the semiconductive polyolefin composition is used in cable applications, the cable layer can be crosslinked before the use in the end application thereof. The crosslinking of polyolefin compositions is well known in the art any may be achieved via any conventional means. Details regarding polyolefin crosslinking, in particular for semiconductive polyolefin compositions, are described, for example in WO2019/115548.

Component (B)

Component (B) comprises or consists of first carbonaceous structures and is comprised in the semiconductive polyolefin composition in an amount of from 0.1 to 10.0 wt.%, preferably 0.1 to 9.0 wt.%, more preferably 0.15 to 8.0 wt.% and even more preferably 0.2 to 6.0 wt.% based on the total weight of the semiconductive polyolefin composition.

The first carbonaceous structures (B) may be selected from the group consisting of graphene, modified graphene, reduced graphite worm-like structures, carbon nanotubes, modified carbon nanotubes or combinations thereof, preferably selected from the group consisting of reduced graphite worm-like structures, carbon nanotubes, modified carbon nanotubes or combinations thereof, and more preferably selected from the group consisting of carbon nanotubes, modified carbon nanotubes or combinations thereof.

It is preferred that the first carbonaceous structures (B) have a BET surface area determined according to ASTM D6556-04 of 50 - 1000 $m^2$/g, more preferably of 100 - 850 $m^2$/g and even more preferably of 150 - 700 $m^2$/g.

Further preferred the first carbonaceous structures (B) have a density as determined according to ASTM D7481-09 of 1 to 150 g/L, and more preferably of 5 to 140 g/L.

Preferably, the first carbonaceous structures may be selected from a reduced graphite oxide worm-like (rGOW) structure (or particle) and/or branched carbon nanotubes and/or crosslinked carbon nanotubes, more preferably from a rGOW structure and/or branched carbon nanotubes. The rGOW structure may be as defined in WO2019/115548. The branched carbon nanotubes and the crosslinked carbon nanotubes may be single-walled carbon nanotubes or multi-walled carbon nanotubes. The carbon nanotubes may also be a network of branched and/or crosslinked carbon nanotubes. The network of branched carbon nanotubes and/or crosslinked carbon nanotubes may be in the form of flakes.

The rGOW structure, the network of branched carbon nanotubes and the network of crosslinked nanotubes exhibit a high surface area and low bulk density of the particles and/or flakes.

Further details regarding suitable first carbonaceous structures (B) are given, for example, in WO2019/115548.

Especially preferred first carbonaceous structures (B) comprise carbon nanotubes, even more preferred branched and/or crosslinked carbon nanotubes and most preferred a network of branched carbon nanotubes.

Preferably, the carbon nanotubes are multi-walled carbon nanotubes, more preferably multi-walled carbon nanotubes with an average of 4 walls.

Preferably the carbon nanotubes have a mean diameter in the range of from 5-25 nm, and more preferably in the range of from 10-20nm.

Further preferred the carbon nanotubes have an average length in the range of from 10-150 nm, more preferably in the range of from 30-120nm, and even more preferably in the range of from 50-100nm.

It is further preferred that the carbon nanotubes have a purity of more than 95%, more preferably of more than 97% and even more preferably of more than 98%.

Preferably, the first carbonaceous structures (B) are present in the semiconductive polyolefin composition in an amount of from 0.2 to 2.0 wt.%, preferably 0.25 to 1.5 wt. % and more preferably 0.25 to 1.0 wt.% based on the total weight of the semiconductive polyolefin composition.

Further preferably, the first carbonaceous structures (B) comprise, preferably consist of, carbon nanotubes, modified carbon nanotubes or combinations thereof and are present in the semiconductive polyolefin composition in an amount of from 0.2 to 2.0 wt.%, preferably 0.25 to 1.5 wt.% and more preferably 0.25 to 1.0 wt.% based on the total weight of the semiconductive polyolefin composition.

According to a preferred embodiment the first carbonaceous structures (B) are carbon nanotubes, preferably branched carbon nanotubes; and/or the carbon nanotubes are multi-walled carbon nanotubes, more preferably multi-walled carbon nanotubes with an average of 4 walls; and/or the carbon nanotubes have a mean diameter in the range of from 5-25 nm, and more preferably in the range of from 10-20nm; and/or the carbon nanotubes have an average length in the range of from 10-150 nm, more preferably in the range of from 30-120nm, and even more preferably in the range of from 50-100nm; and/or the carbon nanotubes have a purity of more than 95%, more preferably of more than 97% and even more preferably of more than 98%.

Component (C)

Component (C) comprises or consists of carbon black (C1) and/or second carbonaceous structures (C2) and is comprised in the semiconductive polyolefin composition in an amount of from 0.2 to 15.0 wt.%, preferably 0.2 to 12.5 wt.%, more preferably 0.25 to 11.5 wt.% and most preferably 0.5 to 11 wt.% based on the total weight of the semiconductive polyolefin composition.

Carbon black (C1) may be selected from any commercially available carbon black. Specific examples for suitable carbon black grades comprise CSX-254, Vulcan XC500, Vulcan XCMax (all available from Cabot Corporation, Boston, MA, USA) and DenkaBlack (available from Denka Corporation, Japan).

Preferably the carbon black (C1) has a (bulk) density determined according to ASTM D-1513 in the range of from 10-600 kg/m$^3$, more preferably of from of 20-500 kg/m$^3$ and even more preferably of from 30-450 kg/m$^3$.

Preferably the carbon black (C1) has an iodine number as determined according to ASTM D-1510 of from 10-2000 mg/g, more preferably of from 30-1600 mg/g and even more preferably of from 50-1400 mg/g.

The second carbonaceous structures (C2) may be selected from the same group of materials as described herein above with respect to the first carbonaceous structures (B), with the proviso that the second carbonaceous structures (C2) are different from the first carbonaceous structures (B).

It is preferred that the second carbonaceous structures (C2) have a BET surface area determined according to ASTM D6556-04 of from 50-1000 m$^2$/g, more preferably of from 300-850 m$^2$/g and even more preferably of from 500-750 m$^2$/g.

Further preferred the first carbonaceous structures (C2) have a density as determined according to ASTM D7481-09 of from 1-150 g/L, and more preferably of from 5-50 g/L.

Preferably, component (C) comprises only carbon black (C1); or component (C) comprises only second carbonaceous structures (C2); or the second carbonaceous structures (C2) are selected from the group consisting of graphene, modified graphene, reduced graphite worm-like structures, or combinations thereof.

Preferably, the second carbonaceous structures (C2) are present in the semiconductive polyolefin composition in an amount of from 0.2 to 10 wt.%, preferably 0.25 to 5 wt.%, and more preferably 0.25 to 2.5 wt.% based on the total weight of the semiconductive polyolefin composition.

Further preferably, especially in case that the first carbonaceous structures (B) comprise carbon nanotubes, modified carbon nanotubes or combinations thereof, component (C), preferably carbon black (C1) is comprised in the semiconductive polyolefin composition in an amount of from 0.2 to 10 wt.%, preferably 0.25 to 5 wt.%, and more preferably 0.25 to 2.5 wt.% based on the total weight of the semiconductive polyolefin composition.

Component (D)

The semiconductive polyolefin composition may optionally comprise further additive(s), such as antioxidant(s), stabilizer(s), water tree retardant additive(s), processing aid(s), scorch retarder(s), filler(s), metal deactivator(s), free radical generating agent(s), crosslinking booster(s), flame retardant additive(s), acid or ion scavenger(s), additional inorganic filler(s), voltage stabilizer(s) or any mixtures thereof. Additives are typically used in total amount of from 0.01 wt.% to 10 wt.%.

Non-limiting examples of antioxidants are sterically hindered or semi-hindered phenols, aromatic amines, aliphatic sterically hindered amines, organic phosphites or phosphonites, thio compounds, and mixtures thereof.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with tert-butyl groups, preferably in meta or para position, which may bear further substituents such as phenyl groups.

More preferred, the antioxidant is selected from the group of 4,4'-bis(1,1'dimethylbenzyl)diphenylamine, para-oriented styrenated diphenylamines, 6,6'-di-tert-butyl-2,2'-thiodi-p-cresol, tris(2-tert-butyl-4-thio-(2'-methyl-4'hydroxy-5'-tert-butyl)phenyl-5-methyl)phenylphosphite, polymerized 2,2,4-trimethyl-1,2-dihydroquinoline, or derivatives thereof. Of course, not only one of the above-described antioxidants may be used but also any mixture thereof.

The amount of an antioxidant is preferably from 0.005 to 2.5 wt.%, based on the weight of the semiconductive composition, more preferably from 0.005 to 2 wt.%, still more preferably from 0.01 to 1.5 wt.%, and even more preferably from 0.04 to 1.2 wt.%, based on the weight of the semiconductive composition.

The scorch retarder (SR) is a well-known additive type in the field and can i.e. prevent premature crosslinking. As also known the SR may also contribute to the unsaturation level of the polymer composition. Examples of scorch retarders are allyl compounds, such as dimers of aromatic alpha-methyl alkenyl monomers, preferably 2,4-di-phenyl-4-methyl-1-pentene, substituted or unsubstituted diphenylethylenes, quinone derivatives, hydroquinone derivatives, monofunctional vinyl containing esters and ethers, monocyclic hydrocarbons having at least two or more double bonds, or mixtures thereof. Preferably, the amount of a scorch retarder is within the range of 0.005 to 2.0 wt.%, more preferably within the range of 0.005 to 1.5 wt.%, based on the weight of the semiconductive composition. Further preferred ranges are e.g. from 0.01 to 0.8 wt.%, 0.03 to 0.75 wt.%, 0.03 to 0.70 wt.%, or 0.04 to 0.60 wt.%, based on the weight of the semiconductive composition. One preferred SR added to the semiconductive composition is 2,4-diphenyl-4-methyl-1-pentene.

Examples of processing aids include but are not limited to metal salts of carboxylic acids such as zinc stearate or calcium stearate; fatty acids; fatty amids; polyethylene wax; copolymers of ethylene oxide and propylene oxide; petroleum waxes; non-ionic surfactants and polysiloxanes.

Non-limiting examples of additional fillers are clays precipitated silica and silicates; fumed silica calcium carbonate.

Semiconductive polyolefin composition

Components (A) to (D) comprised in the seminconductive polyolefin composition of the present invention add up to 100 wt.%.

The combined amount of components (B) and (C) in the semiconductive polyolefin composition of the present invention is at least 0.3 wt.% and not more than 15.0 wt.% based on the total weight of the semiconductive polyolefin composition.

More specifically, the combined amount of components (B) and (C) is at least 0.4 wt.%, preferably at least 0.5 wt.%, and more preferably at least 1.0 wt.% based on the total weight of the semiconductive polyolefin composition; and/or the combined amount of components (B) and (C) is not more than 12.5 wt.%, and preferably not more than 11 wt.% based on the total weight of the semiconductive polyolefin composition.

Moreover, the weight ratio between components (B) and (C) is in the range of 9:1 to 1:20, preferably in the range of 8:1 to 1:15 and more preferably in the range of 7:1 to 1:10.

More preferably, especially in case that the first carbonaceous structures (B) comprise carbon nanotubes, modified carbon nanotubes or combinations thereof, the combined amount of components (B) and (C) is at least 0.5 wt.%, and preferably not more than 10 wt.%, more preferably is in the range of 0.5 wt.% to 5 wt.% based on the total weight of the semiconductive polyolefin composition.

The semiconductive polyolefin composition of the present invention has an electrical percolation threshold of not more than 5 wt.%, preferably not more than 4 wt.% and more preferably not more than 3 wt.% of the combined amount of components (B) and (C) dispersed in the olefin polymer base resin (A), the electrical percolation threshold being defined as the critical concentration in wt.% of the components (B) and (C) in the olefin polymer base resin (A) where an exponential increase in electrical conductivity is observed.

The semiconductive polyolefin composition has a conductivity of at least $1 \cdot 10^{-7}$ S/cm determined according to Broadband Dielectric Spectroscopy for a percolation threshold of 1.0 wt.% or lower and 2-point electrical measurements for a percolation threshold of more than 1.0 wt.%; preferably, the polyolefin composition has a conductivity of at least $1 \cdot 10^{-6}$ S/cm determined according to Broadband Dielectric Spectroscopy for a percolation threshold of 1.0 wt.% or lower and 2-point electrical measurements for a percolation threshold of more than 1.0 wt.%.

More preferably, especially in case that the first carbonaceous structures (B) comprise carbon nanotubes, modified carbon nanotubes or combinations thereof, the semiconductive polyolefin composition has an electrical percolation threshold of 1 wt.% or lower of the combined amount of components (B) and (C) dispersed in the olefin polymer base resin (A); and the polyolefin composition has a conductivity of at least $1 \cdot 10^{-5}$ S/cm determined according to Broadband Dielectric Spectroscopy for a percolation threshold of 1.0 wt.% or lower and 2-point electrical measurements for a percolation threshold of more than 1.0 wt.%.

The semiconductive polyolefin composition of the present invention surprisingly provides a number of advantages. First, it has an improved processability due to comparatively low viscosity (higher $MFR_2$ values) as compared to conventional semiconductive polyolefin compositions containing only one type of conductive filler. Unexpectedly, the use of a combination of components (B) and (C) as conductive filler in a semiconductive polyolefin composition has been found to provide the same or even higher levels of conductivity at lower filler loadings when compared to compositions comprising conventional carbon blacks or previously reported graphene fillers.

According to a preferred embodiment the semiconductive polyolefin composition according to any of the preceding claims comprises, preferably consists of,

(A) 90 to 99.5 wt.% of the olefin polymer base resin based on the total weight of the semiconductive polyolefin composition;

(B) 0.2 to 2.0 wt.%, preferably 0.25 to 1.5 wt.% and more preferably 0.25 to 1.0 wt.% of the first carbonaceous structures based on the total weight of the semiconductive polyolefin composition; and

(C) 0.2 to 10 wt.%, preferably 0.25 to 5 wt.%, and more preferably 0.25 to 2.5 wt.% of carbon black and/or the second carbonaceous structures, preferably of carbon black, based on the total weight of the semiconductive polyolefin composition;

wherein the combined amount of components (B) and (C) is at least 0.5 wt.%, and preferably not more than 10 wt.%, more preferably is in the range of 0.5 wt.% to 5 wt.% based on the total weight of the semiconductive polyolefin composition;

wherein the semiconductive polyolefin composition has an electrical percolation threshold of 1 wt.% or lower of the combined amount of components (B) and (C) dispersed in the olefin polymer base resin (A);

wherein the polyolefin composition has a conductivity of at least $1 \cdot 10^{-5}$ S/cm determined according to Broadband Dielectric Spectroscopy for a percolation threshold of 1.0 wt.% or lower and 2-point electrical measurements for a percolation threshold of more than 1.0 wt.%; and

preferably the first carbonaceous structures are carbon nanotubes, modified carbon nanotubes or combinations thereof.

Any suitable process known in the art may be used for the preparation of the semiconductive polyolefin compositions of the present invention such as dry-mixing, solution mixing, solution shear mixing, melt mixing, extrusion, etc. It is however preferred to prepare the semiconductive polyolefin composition by melt-mixing said olefin polymer base resin (a) with first carbonaceous structures and carbon black and/or second carbonaceous structures (b) in an extruder, such as a Brabender compounder.

The present invention is also directed to a process for producing the preferred inventive semiconductive polyolefin composition, comprising pre-mixing of the first carbonaceous structures and carbon black and/or second carbonaceous structures. Pre-mixing as used herein shall indicate that the mixing occurs before the resulting mixture is contacted and mixed with the olefin polymer base resin. The premixing may be conducted in a dispersant such as isopropanol. Preferably, the olefin polymer base resin is subsequently added to the dispersed first carbonaceous structures, and carbon black and/or second carbonaceous structures, and/or filler mixture, before the complete mixture is introduced into a compounder, preferably an extruder, such as a Brabender compounder, as will be described in greater detail below.

The present invention also relates to a power cable comprising a semiconductive layer which comprises the semiconductive polyolefin composition according to the invention.

The object of the present invention can also be achieved by the use of the inventive semiconductive polyolefin composition in a semiconductive layer of a power cable.

Further, the present invention is concerned with semiconductive polyolefin compositions obtainable by such a process.

Below, the invention is described by virtue of non-limiting examples.

## EXAMPLE SECTION

### 1. Materials

### *Polymer Base Resins*

Polypropylene (PP)

The polypropylene (PP) used in the examples is HC300BF, which is an isotactic propylene homopolymer having a^n $MFR_2$ (230 °C / 2.16 kg) of 3.3 g/10 min (Isotacticity Index: 98%), commercially available from Borealis AG.

High density polyethylene (HDPE)

In all examples using HDPE the polyolefin base resin was a Ziegler-Natta catalyzed HDPE being a unimodal high density copolymer of ethylene and 1-butene (comonomer content of 0.8 mol%), which is prepared by a low pressure polymerization process in a gas phase reactor and which has a density of 962 kg/m$^3$ and an $MFR_2$ (2.16kg, 190 °C) of 12 g/10min. The HDPE was obtained from Borealis AB.

Ethylene-butyl acrylate (EBA)

The ethylene-butyl acrylate (EBA) used in the examples is an ethylene-butyl acrylate copolymer (butyl acrylate content of 17 wt.%, density of 925.5 kg/m$^3$, $MFR_2$ = 7 g/10 min), which was obtained from Borealis Antwerp.

Low density polyethylene (LDPE)

In all examples using LDPE the olefin polymer base resin was a standard low density polyethylene (LDPE). The LDPE was obtained from Borealis AB, it was produced in a tubular reactor, having an $MFR_2$ (2.16kg, 190 °C) of 2 g/10 min and density of 922.5 kg/m$^3$.

***Carbonaceous structures***

Carbonaceous structure 1 **(CS1)** was obtained by Cabot Corporation, Boston, MA, USA. CS1 (GPX-404) is a carbonaceous structure forming clusters or worm-like structures and is obtained from Cabot Corporation, Boston, MA, USA. CS1 can be obtained by the process as described in WO2019/070514.
Carbon Nanostructures (CNS) **(CS2)** Athlos were obtained by Cabot Corporation, Boston, MA, USA.
The properties of the carbonaceous structures are summarized in **Table 1.**

| Sample | BET (m$^2$/g) | Volatile (%) | Form | Density (g/L) |
|--------|--------------|--------------|-------|---------------|
| **CS1** | 674 | 5.4 | Worms | 8 |
| **CS2** | 200 | N/A | N/A | 135 |

***Carbon Black***

Vulcan XC500 **(CB1)** was obtained by Cabot Corporation, Boston, MA, USA.
Vulcan XCMax **(CB2)** was obtained by Cabot Corporation, Boston, MA, USA.
CSX-254 Carbon Black **(CB3)** was obtained by Cabot Corporation, Boston, MA, USA.
Denka Black Carbon Black **(CB4)** was obtained by Denka Corporation, Japan.

**2. Measurement methods and procedures**

***Melt Flow Rate***

The $MFR_2$ was measured with 2.16 kg load at 190°C for polyethylene and at 230°C for polypropylene according to ISO 1133. $MFR_{21}$ was measured with 21.6 kg load at 190°C for polyethylene and at 230°C for polypropylene according to ISO 1133.

***Polymer density***

The polymer density is measured according to the density immersion method described in ISO 1183.

*Density of carbonaceous structures*

Densities are determined using a method similar to ASTM D7481 - 09, i.e. weighing a specified volume of material after at least three taps.

*BET surface area*

BET is determined using ASTM D6556-04.

*Volatility*

Volatilities are determined using thermogravimetric analysis under nitrogen.

*Particle Size Distribution (PSD)*

PSD is determined by scanning electron microscopy without statistical analysis.

*Electrical Percolation Threshold*

The electrical percolation threshold as defined above was determined as follows:
The electrical conductivity of each of the samples comprising different amounts of the filler is calculated as the reciprocal of the electrical resistivity measured above:

$$\sigma = \frac{1}{\rho}$$

The obtained values of the electrical conductivity are plotted against the values of the amount of the filler. The percolation threshold was determined from the plot as the critical (minimum) concentration in wt% of the reduced graphite oxide worm-like structures (b) in the olefin polymer base resin (a) where an exponential increase (at least 2-3 order of magnitude) in electrical conductivity is observed, as will be shown below.

*Conductivity*

The conductivity is the electrical conductivity above the percolation threshold in situations where the network is fully developed and, despite further addition of the filler, the change in electrical conductivity is minimal (within an order of magnitude). Thus, the post-percolation conductivity is determined from the plot at the area of the curve, where the exponential growth of the electrical conductivity has stopped and the curve has flattened.

*Compounding*

Filled polyolefin compositions having incorporated carbonaceous structures and/or carbon black were prepared as follows:
All samples were produced using a Brabender mixer (Plasticoder PLE-331). The mixer was preheated (180°C for polyethylene-based resins, 210°C for polypropylene-based resins) prior to the addition of the resin. The rotation speed was set to 10 rpm. The resin was added first followed by the filler. As soon as all the components were added, the rotation speed was increased to 50 rpm and kept for 10 minutes. After the mixing was done, the composition was pelleted and samples were prepared for the relevant tests.

**3. Results**

In the following Tables properties of the obtained semi-conductive polyolefin compositions are shown.

## TABLE 2

| Material | Filler 1 Amount (wt%) | Filler 2 Amount (wt%) | Conductivity (S/cm) |
|---|---|---|---|
| CE1 | | | |
| PP | CS1 | | |
| | 0.2 | | 1.66E-17 |
| | 0.5 | | 1.39E-17 |

| | | | |
|---|---|---|---|
| | 1.0 | | 1.93E-16 |
| | 1.5 | | 3.27E-09 |
| | 2.0 | | 6.55E-07 |
| | 2.5 | | 2.92E-04 |
| | 3.5 | | 0.00243 |
| | 4.0 | | 0.00518 |
| | 5.0 | | 0.00354 |
| **IE1** | | | |
| **PP** | **CS1** | **CB2** | |
| | 1.2 | 2.8 | 3.97E-06 |
| | 2.0 | 2.0 | 7.48E-04 |
| | 2.8 | 1.2 | 0.00638 |
| | 3.6 | 0.4 | 0.00707 |
| **IE2** | | | |
| **PP** | **CS1** | **CB1** | |
| | 1.2 | 2.8 | 1.55E-07 |
| | 2.0 | 2.0 | 3.71E-04 |
| | 2.8 | 1.2 | 6.95E-04 |
| | 3.6 | 0.4 | 6.94E-04 |
| **IE3** | | | |
| **PP** | **CS1** | **CB3** | |
| | 2.0 | 2.0 | 2.23E-4 |
| | 2.8 | 1.2 | 0.00247 |
| | 3.6 | 0.4 | 0.00498 |
| **IE4** | | | |
| **PP** | **CS1** | **CB4** | |
| | 2.0 | 2.0 | 3.85E-04 |
| | 2.8 | 1.2 | 0.00237 |
| | 3.6 | 0.4 | 0.00997 |

## TABLE 3

| Material | Filler 1 Amount (wt%) | Filler 2 Amount (wt%) | Filler 3 Amount (wt%) | Conductivity (S/cm) |
|---|---|---|---|---|
| CE2 | | | | |
| HDPE | CS1 | | | |
| | 0.25 | | | 2.64E-17 |
| | 0.5 | | | 6.07E-17 |
| | 1.0 | | | 5.80E-16 |
| | 1.5 | | | 3.08E-06 |
| | 2.0 | | | 6.15E-06 |
| | 2.5 | | | 4.10E-04 |
| | 3.0 | | | 5.66E-04 |
| | 4.0 | | | 0.00288 |
| | 5.0 | | | 0.02019 |
| CE3 | | | | |
| HDPE | | | CB4 | |
| | | | 1.0 | 1.34E-16 |
| IE5 | | | | |
| HDPE | CS1 | CS2 | | |
| | 0.75 | 0.25 | | 0.00283 |
| | 0.5 | 0.5 | | 0.07128 |
| | 0.25 | 0.75 | | 0.0498 |
| IE6 | | | | |
| HDPE | CS1 | CS2 | CB4 | |
| | 0.5 | 0 | 0.5 | 1.16E-15 |
| | 0.375 | 0.25 | 0.375 | 4.08E-05 |
| | 0.25 | 0.5 | 0.25 | 0.00438 |
| | 0.125 | 0.75 | 0.125 | 0.08198 |

## TABLE 4

| Material | Filler 1 Amount (wt%) | Filler 2 Amount (wt%) | Filler 3 Amount (wt%) | Conductivity (S/cm) |
|---|---|---|---|---|
| CE4 | | | | |
| HDPE | CS2 | | | |
| | 0.05 | | | 1.14E-10 |
| | 0.1 | | | 4.05E-05 |
| | 0.125 | | | 2.46E-04 |
| | 0.15 | | | 1.62E-04 |
| | 0.2 | | | 5.74E-03 |
| | 0.5 | | | 3.25E-03 |
| | 1.0 | | | 1.50E-02 |
| | 1.5 | | | 1.63E-02 |
| | 2.0 | | | 4.07E-02 |
| IE7 | | | | |
| HDPE | CS2 | CB4 | | |
| | 0.25 | 0.75 | | 6.91E-03 |
| | 0.5 | 0.5 | | 8.67E-02 |
| | 0.75 | 0.25 | | 7.92E-02 |
| CE5 | | | | |
| HDPE | | | CB3 | |
| | | | 1 | 1.69E-16 |
| IE8 | | | | |
| HDPE | CS2 | | CB3 | |
| | 0.25 | | 0.75 | 2.39E-02 |
| | 0.5 | | 0.5 | 4.81E-02 |
| | 0.75 | | 0.25 | 3.00E-01 |
| CE6 | | | | |
| EBA | CS2 | | | |
| | 0.1 | | | 3.25E-10 |

| | | | | |
|---|---|---|---|---|
| | 0.5 | | | 4.15E-04 |
| | 0.75 | | | 1.40E-03 |
| | 1.0 | | | 1.64E-02 |
| **CE7** | | | | |
| **EBA** | | **CB4** | | |
| | | 1 | | 5.84E-16 |
| **IE9** | | | | |
| **EBA** | **CS2** | **CB4** | | |
| | 0.25 | 0.75 | | 1.38E-03 |
| | 0.5 | 0.5 | | 8.16E-02 |
| | 0.75 | 0.25 | | 1.05E-01 |
| **CE8** | | | | |
| **LDPE** | **CS2** | | | |
| | 0.1 | | | 4.70E-16 |
| | 0.5 | | | 4.42E-04 |
| | 0.75 | | | 1.39E-03 |
| | 1.0 | | | 1.31E-02 |
| **CE9** | | | | |
| **LDPE** | | **CB4** | | |
| | | 1.0 | | 4.70E-17 |
| **IE10** | | | | |
| **LDPE** | **CS2** | **CB4** | | |
| | 0.25 | 0.75 | | 9.39E-05 |
| | 0.5 | 0.5 | | 4.43E-03 |
| | 0.75 | 0.25 | | 3.24E-03 |

As can be derived from the inventive examples the combination of a first carbonaceous structure with carbon black and/or a second carbonaceous structure provides advantageous conductivity with low filler loading. In particular is shown by IE1-IE4 and IE6-IE10 that the amount of carbon black can be significantly reduced which has i.a. a positive effect on the processing properties of the respective semiconductive polyolefin compositions.

A similar effect can be observed by the combination of first and second carbonaceous structures as demonstrated in IE5. IE5 shows that the combination of two carbonaceous structures according to the invention allows the reduction of the amount of in particular CS1 used in the semiconductive polyolefin composition while having good conductivity. This has also a positive effect on the processing.

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

**Claims**

1.  A semiconductive polyolefin composition comprising

    (A) 80 to 99.5 wt.% of an olefin polymer base resin based on the total weight of the semiconductive polyolefin composition;
    (B) 0.1 to 10.0 wt.% of first carbonaceous structures based on the total weight of the semiconductive polyolefin composition;
    (C) 0.2 to 15.0 wt.% of carbon black and/or second carbonaceous structures based on the total weight of the semiconductive polyolefin composition; and
    (D) optionally additives;
    wherein the combined amount of components (B) and (C) is at least 0.3 wt.% and not more than 15.0 wt.% based on the total weight of the semiconductive polyolefin composition; and
    wherein the semiconductive polyolefin composition has an electrical percolation threshold of not more than 5 wt.% of the combined amount of components (B) and (C) dispersed in the olefin polymer base resin (A), the electrical percolation threshold being defined as the critical concentration in wt.% of the components (B) and (C) in the olefin polymer base resin (A) where an exponential increase in electrical conductivity is observed;
    wherein the polyolefin composition has a conductivity of at least $1 \cdot 10^{-7}$ S/cm determined according to Broadband Dielectric Spectroscopy for a percolation threshold of 1.0 wt.% or lower and 2-point electrical measurements for a percolation threshold of more than 1.0 wt.%; and
    wherein components (A) to (D) add up to 100 wt.%.

2.  The semiconductive polyolefin composition according to claim 1, wherein the first carbonaceous structures (B) are selected from the group consisting of graphene, modified graphene, reduced graphite worm-like structures, carbon nanotubes, modified carbon nanotubes or combinations thereof, preferably selected from the group consisting of carbon nanotubes, modified carbon nanotubes or combinations thereof.

3.  The semiconductive polyolefin composition according to any of the preceding claims,

    wherein component (C) comprises only carbon black; or
    wherein component (C) comprises only second carbonaceous structures; or
    wherein the second carbonaceous structures are selected from the group consisting of graphene, modified graphene, reduced graphite worm-like structures, or combinations thereof.

4.  The semiconductive polyolefin composition according to any of the preceding claims, wherein the weight ratio between components (B) and (C) is in the range of 9:1 to 1:20, preferably in the range of 8:1 to 1:15 and more preferably in the range of 7:1 to 1:10.

5.  The semiconductive polyolefin composition according to any of the preceding claims, wherein the olefin polymer base resin (A) is present in an amount of 85 to 99.5 wt.% and preferably 87 to 99.5 wt.% based on the total weight of the semiconductive polyolefin composition.

6.  The semiconductive polyolefin composition according to any of the preceding claims, wherein the first carbonaceous structures (B) are present in an amount of 0.1 to 9.0 wt.%, preferably 0.15 to 8.0 wt.% and more preferably 0.2 to 6.0 wt.% based on the total weight of the semiconductive polyolefin composition.

7.  The semiconductive polyolefin composition according to any of the preceding claims, wherein the carbon black and/or the second carbonaceous structures (C) are present in an amount of 0.2 to 12.5 wt.%, preferably 0.25 to 11.5 wt.% and more preferably 0.5 to 11 wt.% based on the total weight of the semiconductive polyolefin composition.

8. The semiconductive polyolefin composition according to any of the preceding claims,

wherein the combined amount of components (B) and (C) is at least 0.4 wt.%, preferably at least 0.5 wt.%, and more preferably at least 1.0 wt.% based on the total weight of the semiconductive polyolefin composition; and/or wherein the combined amount of components (B) and (C) is not more than 12.5 wt.%, and preferably not more than 11 wt.% based on the total weight of the semiconductive polyolefin composition.

9. The semiconductive polyolefin composition according to any of the preceding claims, wherein the semiconductive polyolefin composition has an electrical percolation threshold of not more than 4 wt.% and preferably of not more than 3 wt.% of the combined amount of components (B) and (C) dispersed in the olefin polymer base resin (A).

10. The semiconductive polyolefin composition according to any of the preceding claims, wherein the polyolefin composition has a conductivity of at least $1 \cdot 10^{-6}$ S/cm determined according to Broadband Dielectric Spectroscopy for a percolation threshold of 1.0 wt.% or lower and 2-point electrical measurements for a percolation threshold of more than 1.0 wt.%.

11. The semiconductive polyolefin composition according to any one of the preceding claims, wherein the olefin polymer base resin (A) is selected from the group consisting of ethylene homopolymer, propylene homopolymer, copolymer of ethylene with at least one $C_3$ to $C_8$ $\alpha$-olefin as comonomer or copolymer of propylene with at least ethylene or one $C_4$ to $C_8$ $\alpha$-olefin as comonomer.

12. The semiconductive polyolefin composition according to any one of the preceding claims, wherein the olefin polymer base resin (A) comprises a copolymer of ethylene with at least one comonomer selected from unsaturated esters or a heterophasic propylene copolymer.

13. Semiconductive polyolefin composition according to any of the preceding claims comprising

(A) 90 to 99.5 wt.% of the olefin polymer base resin based on the total weight of the semiconductive polyolefin composition;
(B) 0.2 to 2.0 wt.%, preferably 0.25 to 1.5 wt.% and more preferably 0.25 to 1 wt.% of the first carbonaceous structures based on the total weight of the semiconductive polyolefin composition; and
(C) 0.2 to 10 wt.%, preferably 0.25 to 5 wt.%, and more preferably 0.25 to 2.5 wt.% of carbon black and/or the second carbonaceous structures, preferably of carbon black, based on the total weight of the semiconductive polyolefin composition;
wherein the combined amount of components (B) and (C) is at least 0.5 wt.%, and preferably not more than 10 wt.%, more preferably is in the range of 0.5 wt.% to 5 wt.% based on the total weight of the semiconductive polyolefin composition;
wherein the semiconductive polyolefin composition has an electrical percolation threshold of 1 wt.% or lower of the combined amount of components (B) and (C) dispersed in the olefin polymer base resin (A);
wherein the polyolefin composition has a conductivity of at least $1 \cdot 10^{-5}$ S/cm determined according to Broadband Dielectric Spectroscopy for a percolation threshold of 1.0 wt.% or lower and 2-point electrical measurements for a percolation threshold of more than 1.0 wt.%; and preferably the first carbonaceous structures are carbon nanotubes, modified carbon nanotubes or combinations thereof.

14. A power cable comprising a semiconductive layer which comprises the semiconductive polyolefin composition as defined in any one of the preceding claims.

15. Use of a semiconductive polyolefin composition as defined in any one of the preceding claims 1 to 13 in a semiconductive layer of a power cable.

**Patentansprüche**

1. Halbleitende Polyolefin-Zusammensetzung, umfassend:

(A) 80 bis 99,5 Gew.-% eines Olefinpolymer-Basisharzes basierend auf dem Gesamtgewicht der halbleitenden Polyolefin-Zusammensetzung,

(B) 0,1 bis 10,0 Gew.-% von ersten kohlenstoffhaltigen Strukturen basierend auf dem Gesamtgewicht der halbleitenden Polyolefin-Zusammensetzung,

(C) 0,2 bis 15,0 Gew.-% von Industrieruß und/oder zweiten kohlenstoffhaltigen Strukturen basierend auf dem Gesamtgewicht der halbleitenden Polyolefin-Zusammensetzung, und

(D) optionale Zusätze,

wobei der kombinierte Anteil der Komponenten (B) und (C) wenigstens 0,3 Gew.-% und nicht mehr als 15,0 Gew.-% basierend auf dem Gesamtgewicht der halbleitenden Polyolefin-Zusammensetzung beträgt,

wobei die halbleitende Polyolefin-Zusammensetzung einen elektrischen Perkolationsschwellenwert von nicht mehr als 5 Gew.-% des kombinierten Anteils der in dem Olefinpolymer-Basisharz (A) dispergierten Komponenten (B) und (C) aufweist, wobei der elektrische Perkolationsschwellenwert als die kritische Konzentration in Gew.-% der Komponenten (B) und (C) in dem Olefinpolymer-Basisharz (A), bei der eine exponentielle Vergrößerung der elektrischen Leitfähigkeit beobachtet wird, definiert ist,

wobei die Polyolefin-Zusammensetzung eine Leitfähigkeit von wenigstens $1 \cdot 10^{-7}$ S/cm, bestimmt gemäß einer dielektrischen Breitband-Spektroskopie für einen Perkolationsschwellenwert von 1,0 Gew.-% oder niedriger und gemäß elektrischen Zweipunkte-Messungen für einen Perkolationsschwellenwert von nicht mehr als 1,0 Gew.-%, aufweist, und

wobei die Komponenten (A) bis (D) zusammen 100 Gew.-% ausmachen.

2. Halbleitende Polyolefin-Zusammensetzung nach Anspruch 1,
wobei die ersten kohlenstoffhaltigen Strukturen (B) aus der Gruppe ausgewählt werden, die aus Graphen, modifiziertem Graphen, reduzierten wurmartigen Graphitstrukturen, Kohlenstoffnanoröhren, modifizierten Kohlenstoffnanoröhren oder Kombinationen aus diesen besteht, und vorzugsweise aus der Gruppe ausgewählt werden, die aus Kohlenstoffnanoröhren, modifizierten Kohlenstoffnanoröhren oder Kombinationen aus diesen besteht.

3. Halbleitende Polyolefin-Zusammensetzung nach einem der vorstehenden Ansprüche,

wobei die Komponente (C) nur Industrieruß umfasst, oder

wobei die Komponente (C) nur zweite kohlenstoffhaltige Strukturen umfasst, oder

wobei die zweiten kohlenstoffhaltigen Strukturen aus der Gruppe ausgewählt sind, die aus Graphen, modifiziertem Graphen, reduzierten wurmartigen Graphenstrukturen oder Kombinationen aus diesen besteht.

4. Halbleitende Polyolefin-Zusammensetzung nach einem der vorstehenden Ansprüche,
wobei das Gewichtsverhältnis zwischen den Komponenten (B) und (C) im Bereich von 9:1 bis 1:20, vorzugsweise im Bereich von 8:1 bis 1:15 und noch besser im Bereich von 7:1 bis 1:10 liegt.

5. Halbleitende Polyolefin-Zusammensetzung nach einem der vorstehenden Ansprüche,
wobei das Olefinpolymer-Basisharz (A) mit einem Anteil von 85 bis 99,5 Gew.-% und vorzugsweise 87 bis 99,5 Gew.-% basierend auf dem Gesamtgewicht der halbleitenden Polyolefin-Zusammensetzung vorhanden ist.

6. Halbleitende Polyolefin-Zusammensetzung nach einem der vorstehenden Ansprüche,
wobei die ersten kohlenstoffhaltigen Strukturen (B) mit einem Anteil von 0,1 bis 9,0 Gew.-%, vorzugsweise 0,15 bis 8,0 Gew.-% und noch besser 0,2 bis 6,0 Gew.-% basierend auf dem Gesamtgewicht der halbleitenden Polyolefin-Zusammensetzung vorhanden sind.

7. Halbleitende Polyolefin-Zusammensetzung nach einem der vorstehenden Ansprüche,
wobei der Industrieruß und/oder die zweiten kohlenstoffhaltigen Strukturen (C) mit einem Anteil von 0,2 bis 12,5 Gew.-%, vorzugsweise 0,25 bis 11,5 Gew.-% und noch besser 0,5 bis 11 Gew.-% basierend auf dem Gesamtgewicht der halbleitenden Polyolefin-Zusammensetzung vorhanden sind.

8. Halbleitende Polyolefin-Zusammensetzung nach einem der vorstehenden Ansprüche,

wobei der kombinierte Anteil der Komponenten (B) und (C) wenigstens 0,4 Gew.-%, vorzugsweise wenigstens 0,5 Gew.-% und noch besser wenigstens 1,0 Gew.-% basierend auf dem Gesamtgewicht der halbleitenden Polyolefin-Zusammensetzung beträgt, und/oder

wobei der kombinierte Anteil der Komponenten (B) und (C) nicht größer als 12,5 Gew.-% und vorzugsweise nicht größer als 11 Gew.-% basierend auf dem Gesamtgewicht der halbleitenden Polyolefin-Zusammensetzung ist.

**9.** Halbleitende Polyolefin-Zusammensetzung nach einem der vorstehenden Ansprüche, wobei die halbleitende Polyolefin-Zusammensetzung einen elektrischen Perkolationsschwellenwert von nicht größer als 4 Gew.-% und vorzugsweise nicht größer als 3 Gew.-% des kombinierten Anteils der in dem Olefinpolymer-Basisharz (A) dispergierten Komponenten (B) und (C) aufweist.

**10.** Halbleitende Polyolefin-Zusammensetzung nach einem der vorstehenden Ansprüche, wobei die Polyolefin-Zusammensetzung eine Leitfähigkeit von wenigstens $1 \cdot 10^{-6}$ S/cm, bestimmt gemäß einer dielektrischen Breitband-Spektroskopie für einen Perkolationsschwellenwert von 1,0 Gew.-% oder niedriger und gemäß elektrischen Zweipunkte-Messungen für einen Perkolationsschwellenwert von nicht mehr als 1,0 Gew.-%, aufweist.

**11.** Halbleitende Polyolefin-Zusammensetzung nach einem der vorstehenden Ansprüche, wobei das Olefinpolymer-Basisharz (A) aus der Gruppe ausgewählt ist, die aus Ethylenhomopolymer, Propylenhomopolymer, einem Copolymer von Ethylen mit wenigstens einem $C_3$ bis $C_8$ $\alpha$-Olefin als einem Comonomer oder einem Copolymer von Propylen mit wenigstens Ethylen oder einem von $C_4$ bis $C_8$ $\alpha$-Olefin als einem Comonomer besteht.

**12.** Halbleitende Polyolefin-Zusammensetzung nach einem der vorstehenden Ansprüche, wobei das Olefinpolymer-Basisharz (A) ein Copolymer von Ethylen mit wenigstens einem Comonomer, das aus ungesättigten Estern oder einem heterophasischen Propylen-Copolymer ausgewählt ist, umfasst.

**13.** Halbleitende Polyolefin-Zusammensetzung nach einem der vorstehenden Ansprüche, umfassend:

(A) 90 bis 99,5 Gew.-% des Olefinpolymer-Basisharzes basierend auf dem Gesamtgewicht der halbleitenden Polyolefin-Zusammensetzung,
(B) 0,2 bis 2,0 Gew.-%, vorzugsweise 0,25 bis 1,5 Gew.-% und noch besser 0,25 bis 1 Gew.-% der ersten kohlenstoffhaltigen Strukturen basierend auf dem Gesamtgewicht der halbleitenden Polyolefin-Zusammensetzung, und
(C) 0,2 bis 10 Gew.-%, vorzugsweise 0,25 bis 5 Gew.-% und noch besser 0,25 bis 2,5 Gew.-% von Industrieruß und/oder der zweiten kohlenstoffhaltigen Strukturen und vorzugsweise von Industrieruß basierend auf dem Gesamtgewicht der halbleitenden Polyolefin-Zusammensetzung,
wobei der kombinierte Anteil der Komponenten (B) und (C) wenigstens 0,5 Gew.-%, vorzugsweise nicht mehr als 10 Gew.-% und noch besser im Bereich von 0,5 Gew.-% bis 5 Gew.-% basierend auf dem Gesamtgewicht der halbleitenden Polyolefin-Zusammensetzung beträgt,
wobei die halbleitende Polyolefin-Zusammensetzung einen elektrischen Perkolationsschwellenwert von 1 Gew.-% oder niedriger des kombinierten Anteils der in dem Olefinpolymer-Basisharz (A) dispergierten Komponenten (B) und (C) aufweist,
wobei die Polyolefin-Zusammensetzung eine Leitfähigkeit von wenigstens $1 \cdot 10^{-5}$ S/cm, bestimmt gemäß einer dielektrischen Breitband-Spektroskopie für einen Perkolationsschwellenwert von 1,0 Gew.-% oder niedriger und gemäß elektrischen Zweipunkte-Messungen für einen Perkolationsschwellenwert von nicht mehr als 1,0 Gew.-%, aufweist, und
wobei vorzugsweise die ersten kohlenstoffhaltigen Strukturen Kohlenstoffnanoröhren, modifizierte Kohlenstoffnanoröhren oder Kombinationen aus diesen sind.

**14.** Stromkabel mit einer halbleitenden Schicht, die die halbleitende Polyolefin-Zusammensetzung wie in einem der vorstehenden Ansprüche definiert umfasst.

**15.** Verwendung einer halbleitenden Polyolefin-Zusammensetzung wie in einem der vorstehenden Ansprüche 1 bis 13 definiert in einer halbleitenden Schicht eines Stromkabels.

## Revendications

**1.** Composition de polyoléfine semi-conductrice comprenant

(A) 80 à 99,5 % en poids d'une résine de base de polymère d'oléfine par rapport au poids total de la composition de polyoléfine semi-conductrice ;
(B) 0,1 à 10,0 % en poids de premières structures carbonées par rapport au poids total de la composition de polyoléfine semi-conductrice ;

(C) 0,2 à 15,0 % en poids de noir de carbone et/ou de deuxièmes structures carbonées par rapport au poids total de la composition de polyoléfine semi-conductrice ; et

(D) éventuellement des additifs ;

dans laquelle la quantité combinée des composants (B) et (C) est d'au moins 0,3 % en poids et d'au plus 15,0 % en poids par rapport au poids total de la composition de polyoléfine semi-conductrice ; et

dans laquelle la composition de polyoléfine semi-conductrice a un seuil de percolation électrique ne dépassant pas 5 % en poids de la quantité combinée des composants (B) et (C) dispersés dans la résine de base de polymère d'oléfine (A), le seuil de percolation électrique étant défini comme la concentration critique en % en poids des composants (B) et (C) dans la résine de base de polymère d'oléfine (A) où une augmentation exponentielle de la conductivité électrique est observée ;

dans laquelle la composition de polyoléfine a une conductivité d'au moins $1 \cdot 10^{-7}$ S/cm déterminée par spectroscopie diélectrique à large bande pour un seuil de percolation de 1,0 % en poids ou moins et par des mesures électriques en deux points pour un seuil de percolation supérieur à 1,0 % en poids ; et dans laquelle les composants (A) à (D) s'additionnent jusqu'à 100 % en poids.

2. Composition de polyoléfine semi-conductrice selon la revendication 1,
dans laquelle les premières structures carbonées (B) sont choisies dans le groupe constitué par le graphène, le graphène modifié, les structures vermiformes en graphite réduit, les nanotubes de carbone, les nanotubes de carbone modifiés ou des combinaisons de ceux-ci, de préférence choisies dans le groupe constitué par les nanotubes de carbone, les nanotubes de carbone modifiés ou des combinaisons de ceux-ci.

3. Composition de polyoléfine semi-conductrice selon l'une quelconque des revendications précédentes,

dans laquelle le composant (C) comprend uniquement du noir de carbone ; ou
dans laquelle le composant (C) comprend uniquement des deuxièmes structures carbonées ; ou
dans laquelle les deuxièmes structures carbonées sont choisies dans le groupe constitué par le graphène, le graphène modifié, les structures vermiformes en graphite réduit, ou des combinaisons de ceux-ci.

4. Composition de polyoléfine semi-conductrice selon l'une quelconque des revendications précédentes,
dans laquelle le rapport en poids entre les composants (B) et (C) est dans la plage de 9:1 à 1:20, de préférence dans la plage de 8:1 à 1:15 et plus préférentiellement dans la plage de 7:1 à 1:10.

5. Composition de polyoléfine semi-conductrice selon l'une quelconque des revendications précédentes,
dans laquelle la résine de base de polymère d'oléfine (A) est présente en une quantité de 85 à 99,5 % en poids et de préférence de 87 à 99,5 % en poids par rapport au poids total de la composition de polyoléfine semi-conductrice.

6. Composition de polyoléfine semi-conductrice selon l'une quelconque des revendications précédentes,
dans laquelle les premières structures carbonées (B) sont présentes en une quantité de 0,1 à 9,0 % en poids, de préférence de 0,15 à 8,0 % en poids et plus préférentiellement de 0,2 à 6,0 % en poids par rapport au poids total de la composition de polyoléfine semi-conductrice.

7. Composition de polyoléfine semi-conductrice selon l'une quelconque des revendications précédentes,
dans laquelle le noir de carbone et/ou les deuxièmes structures carbonées (C) sont présent(e)s en une quantité de 0,2 à 12,5 % en poids, de préférence de 0,25 à 11,5 % en poids et plus préférentiellement de 0,5 à 11 % en poids par rapport au poids total de la composition de polyoléfine semi-conductrice.

8. Composition de polyoléfine semi-conductrice selon l'une quelconque des revendications précédentes,

dans laquelle la quantité combinée des composants (B) et (C) est d'au moins 0,4 % en poids, de préférence d'au moins 0,5 % en poids et plus préférentiellement d'au moins 1,0 % en poids par rapport au poids total de la composition de polyoléfine semi-conductrice ; et/ou
dans laquelle la quantité combinée des composants (B) et (C) est d'au plus 12,5 % en poids et de préférence d'au plus 11 % en poids par rapport au poids total de la composition de polyoléfine semi-conductrice.

9. Composition de polyoléfine semi-conductrice selon l'une quelconque des revendications précédentes,
dans laquelle la composition de polyoléfine semi-conductrice a un seuil de percolation électrique ne dépassant pas 4 % en poids et, de préférence, ne dépassant pas 3 % en poids de la quantité combinée des composants (B) et (C) dispersés dans la résine de base de polymère d'oléfine (A).

10. Composition de polyoléfine semi-conductrice selon l'une quelconque des revendications précédentes, dans laquelle la composition de polyoléfine a une conductivité d'au moins $1.10^{-6}$ S/cm déterminée selon la spectroscopie diélectrique à large bande pour un seuil de percolation de 1,0 % en poids ou moins et des mesures électriques en deux points pour un seuil de percolation de plus de 1,0 % en poids.

11. Composition de polyoléfine semi-conductrice selon l'une quelconque des revendications précédentes, dans laquelle la résine de base de polymère d'oléfine (A) est choisie dans le groupe constitué par l'homopolymère d'éthylène, l'homopolymère de propylène, un copolymère d'éthylène avec au moins une $\alpha$-oléfine en $C_3$ à $C_8$ comme comonomère ou un copolymère de propylène avec au moins de l'éthylène ou une $\alpha$-oléfine en $C_4$ à $C_8$ comme comonomère.

12. Composition de polyoléfine semi-conductrice selon l'une quelconque des revendications précédentes, dans laquelle la résine de base de polymère d'oléfine (A) comprend un copolymère d'éthylène avec au moins un comonomère choisi parmi les esters insaturés ou un copolymère de propylène hétérophasique.

13. Composition de polyoléfine semi-conductrice selon l'une quelconque des revendications précédentes, comprenant

(A) 90 à 99,5 % en poids de la résine de base de polymère d'oléfine par rapport au poids total de la composition de polyoléfine semi-conductrice ;
(B) 0,2 à 2,0 % en poids, de préférence 0,25 à 1,5 % en poids et plus préférentiellement 0,25 à 1 % en poids des premières structures carbonées par rapport au poids total de la composition de polyoléfine semi-conductrice ; et
(C) 0,2 à 10 % en poids, de préférence 0,25 à 5 % en poids, et plus préférentiellement 0,25 à 2,5 % en poids de noir de carbone et/ou des deuxièmes structures carbonées, de préférence de noir de carbone, par rapport au poids total de la composition de polyoléfine semi-conductrice ;
dans laquelle la quantité combinée des composants (B) et (C) est d'au moins 0,5 % en poids, et de préférence de pas plus de 10 % en poids, plus préférentiellement dans la plage de 0,5 % en poids à 5 % en poids par rapport au poids total de la composition de polyoléfine semi-conductrice ;
dans laquelle la composition de polyoléfine semi-conductrice a un seuil de percolation électrique de 1 % en poids ou moins de la quantité combinée des composants (B) et (C) dispersés dans la résine de base de polymère d'oléfine (A) ;
dans laquelle la composition de polyoléfine présente une conductivité d'au moins $1.10^{-5}$ S/cm déterminée par spectroscopie diélectrique à large bande pour un seuil de percolation de 1,0 % en poids ou moins et par des mesures électriques en deux points pour un seuil de percolation de plus de 1,0 % en poids ; et
de préférence, les premières structures carbonées sont des nanotubes de carbone, des nanotubes de carbone modifiés ou des combinaisons de ceux-ci.

14. Câble d'alimentation comprenant une couche semi-conductrice qui comprend la composition de polyoléfine semi-conductrice telle que définie dans l'une quelconque des revendications précédentes.

15. Utilisation d'une composition de polyoléfine semi-conductrice telle que définie dans l'une quelconque des revendications précédentes 1 à 13 dans une couche semi-conductrice d'un câble d'alimentation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5556697 A
- WO 2008045778 A1
- WO 2008143692 A1
- US 2004127621 A1
- US 2002054995 A1
- US 2006241237 A1
- US 2006231792 A1
- WO 03024602 A1
- EP 2374842 B1
- WO 2013033603 A1
- KR 101408925 B1
- WO 03002652 A
- WO 2019115548 A
- WO 2019070514 A

### Non-patent literature cited in the description

- McGraw-Hill Dictionary of Scientific and Technical Terms. 1989, 1698
- **SCHNIEPP**. *Journal of Physical Chemistry B*, 2006, vol. 110, 8535
- **STANKOVICH et al.** *Nature*, 2006, vol. 442, 282
- **SCHNIEPP**. *Journal of Physical Chemistry B*, 2006, vol. 110, 853
- Controlling the Morphology of Polymers. **THOMAS GKOURMPIS** ; **BOREALIS AB** ; **STENUNGSUND SE**. Innovation and Technology
- Controlling the Morphology of Polymers. **THOMAS GKOURMPI**. Innovation and Technology. Springer International Publishing, 2016
- Encyclopedia of Polymer Science and Engineering. 1986, vol. 6, 383-410
- Polyethylene: High-pressure. **R. KLIMESCH** ; **D. LITTMANN** ; **F.-O. MÄHLING**. Encyclopedia of Materials: Science and Technology. Elsevier Science Ltd., 2001, 7181-7184